# EUROPEAN PATENT APPLICATION

(11) **EP 4 549 239 A1**
(43) Date of publication of application: **07.05.2025**
(21) Application number: 24210088.1
(22) Date of filing: 31.10.2024
(51) Int. Cl.: B60N 2/28

(54) **BABY CARRIER**

(30) Priority: 02.11.2023 CN 202311456083
(71) Applicant: Wonderland Switzerland AG, 6312 Steinhausen (CH)
(72) Inventor: ZHANG, Kun, Dongguan, 523648 (CN); MO, Xiaolong, Dongguan, 523648 (CN); NING, Huan, Dongguan, 523648 (CN)
(74) Representative: Müller-Boré & Partner Patentanwälte PartG mbB

(57) **Abstract**

The present disclosure provides a baby carrier (1) including a base (2); a leg section (230) fixedly connected to the base (2); a backrest section (220) pivotably connected to the base (2); and a guider (240/250) configured for passage of a seat belt. The guider (240/250) includes a first guider (240) arranged in the leg section (230) and a second guider (250) arranged in the backrest section (220). The baby carrier (1) according to the present disclosure can be securely bound by the seat belt and can be stabilized against a backrest of a vehicle seat.

## Description

### TECHNICAL FIELD

The present disclosure relates to a technical field of baby products, in particular to a baby carrier.

### BACKGROUND

A baby carrier is a carrier that can carry an infant or a child for movement. The baby carrier may typically have a seat and a handle. The seat is configured to carry the infant, and the handle allows an operator to grip and lift the baby carrier. The baby carrier may be secured to a vehicle seat by being bound with a seat belt.

Generally, the existing baby carrier is not reinforced specially at a position where it is bound by the seat belt, such that the baby carrier may be damaged when subjected to a large impact, causing the baby carrier to diminish or lose protection for the infant.

In addition, the existing baby carrier cannot be stabilized against the vehicle seat, such that the baby carrier is prone to tip over upon impact, thereby posing dangers.

Accordingly, there is a need to develop a baby carrier that can solve the above problems.

### SUMMARY

An objective of the present disclosure is to provide a baby carrier that can be securely bound by a seat belt.

Another objective of the present disclosure is to provide a baby carrier that can be stabilized against a vehicle seat.

To achieve the objectives, according to an aspect of the present disclosure, a baby carrier is provided, including: a base; a leg section fixedly connected to the base; a backrest section pivotably connected to the base; and a guider configured for passage of a seat belt. The guider includes a first guider arranged in the leg section and a second guider arranged in the backrest section.

According to another aspect of the present disclosure, a baby carrier is provided, including: a base; a leg section fixedly connected to the base; a backrest section pivotably connected to the base; and a first guider arranged in the leg section and configured for passage of a waist belt of a seat belt.

According to yet another aspect of the present disclosure, a baby carrier is provided, including: a base; a leg section fixedly connected to the base; a backrest section pivotably connected to the base; and a second guider arranged in the backrest section and configured for passage of a shoulder belt of a seat belt.

In addition to one or more of the features described herein, or as an alternative, further embodiments of the baby carrier may include that the first guider is a waist belt guider, and the second guider is a shoulder belt guider.

In addition to one or more of the features described herein, or as an alternative, further embodiments of the baby carrier may include that the first guider is arranged at an end of the leg section close to the backrest section, and one first guider is provided at each of a left side and a right side of the leg section.

In addition to one or more of the features described herein, or as an alternative, further embodiments of the baby carrier may include that the first guider includes a body integrally formed with the leg section and having a pass-through opening.

In addition to one or more of the features described herein, or as an alternative, further embodiments of the baby carrier may include that a side of the first guider is provided with a reinforcing structure.

In addition to one or more of the features described herein, or as an alternative, further embodiments of the baby carrier may include that the first guider includes an outer cover fixed to the body at the pass-through opening by a first fastener.

In addition to one or more of the features described herein, or as an alternative, further embodiments of the baby carrier may include that a side of the body facing away from the outer cover is provided with a reinforcing rib.

In addition to one or more of the features described herein, or as an alternative, further embodiments of the baby carrier may include that the body is provided with a plurality of reinforcing ribs arranged in a staggered manner.

In addition to one or more of the features described herein, or as an alternative, further embodiments of the baby carrier may include that the body is fixed to a base housing of the base by a second fastener, such that the leg section is non-rotatable relative to the base housing.

In addition to one or more of the features described herein, or as an alternative, further embodiments of the baby carrier may include that the first fastener is arranged around the pass-through opening.

In addition to one or more of the features described herein, or as an alternative, further embodiments of the baby carrier may include that the second fastener is arranged at a position further away from the pass-through opening than the first fastener.

In addition to one or more of the features described herein, or as an alternative, further embodiments of the baby carrier may include that a seat fabric clamping gap for fixing a seat fabric is formed between the outer cover and the body.

In addition to one or more of the features described herein, or as an alternative, further embodiments of the baby carrier may include that the outer cover is formed in a U-shape.

In addition to one or more of the features described herein, or as an alternative, further embodiments of the baby carrier may include that a reinforcing surface is formed on an inner side of the outer cover and is perpendicular to other portions of the outer cover.

In addition to one or more of the features described herein, or as an alternative, further embodiments of the baby carrier may include that a side of the outer cover facing the body is formed with a convex rib and formed with a fixing post corresponding to the first fastener.

In addition to one or more of the features described herein, or as an alternative, further embodiments of the baby carrier may include that the convex rib passes through the fixing post.

In addition to one or more of the features described herein, or as an alternative, further embodiments of the baby carrier may include that the outer cover has a plurality of fixing posts, and the convex rib connects the plurality of fixing posts.

In addition to one or more of the features described herein, or as an alternative, further embodiments of the baby carrier may include that the convex rib is formed in a U-shape.

In addition to one or more of the features described herein, or as an alternative, further embodiments of the baby carrier may include that the first guider further includes a reinforcing sheet fixed to the body at the pass-through opening by a first fastener.

In addition to one or more of the features described herein, or as an alternative, further embodiments of the baby carrier may include that the body is fixed to a base housing of the base by a second fastener, such that the leg section is non-rotatable relative to the base housing, and the first guider further includes a reinforcing sheet fixed to the body by the second fastener.

In addition to one or more of the features described herein, or as an alternative, further embodiments of the baby carrier may include that the second guider includes a base plate and two arms extending from opposite ends of the base plate.

In addition to one or more of the features described herein, or as an alternative, further embodiments of the baby carrier may include that an opening for passage of the seat belt is formed between the two arms.

In addition to one or more of the features described herein, or as an alternative, further embodiments of the baby carrier may include that a clamping gap is formed between each of the two arms and the base plate, and the base plate is formed with limiting teeth within the clamping gap.

In addition to one or more of the features described herein, or as an alternative, further embodiments of the baby carrier may include that the baby carrier further includes an abutting structure arranged at an end of the leg section away from the backrest section.

In addition to one or more of the features described herein, or as an alternative, further embodiments of the baby carrier may include that the abutting structure has a first edge and a second edge at an angle to each other.

In addition to one or more of the features described herein, or as an alternative, further embodiments of the baby carrier may include that the first edge is substantially perpendicular to the second edge.

In addition to one or more of the features described herein, or as an alternative, further embodiments of the baby carrier may include that the abutting structure is integrally formed with the leg section.

In addition to one or more of the features described herein, or as an alternative, further embodiments of the baby carrier may include that the abutting structure is independently formed and fixed to the leg section.

In addition to one or more of the features described herein, or as an alternative, further embodiments of the baby carrier may include that each of the leg section and the backrest section includes a plastic casing and a foam body.

The baby carrier according to the present disclosure can easily guide passage of the safety belt by providing the waist belt guider between the backrest section and the leg section and providing the shoulder belt guider on a back surface of the backrest section. The strength of the waist belt guider can be enhanced by providing the reinforcing structure on the inner side of the waist belt guider. Consequently, it can be ensured that the waist belt guider will not be pulled apart or come off due to excessive deformation upon impact, thereby guaranteeing an effect of fixing the baby carrier, and enhancing a protection effect for the infant or child. By providing the abutting structure, the baby carrier can abut against a backrest of the vehicle seat more firmly. In this way, the baby carrier can be prevented from overturning in a direction toward a vehicle trunk upon impact, thereby providing better protection for the infant or child.

### BRIEF DESCRIPTION OF THE DRAWINGS

Various objectives, features and advantages of the present disclosure will become more apparent by considering the following detailed description of preferred embodiments of the present disclosure in conjunction with the accompanying drawings. The accompanying drawings are merely exemplary illustrations of the present disclosure and are not necessarily drawn to scale. Same reference numerals denote same or similar components throughout the accompanying drawings, in which:
FIG. 1 is a perspective view of a baby carrier according to a first embodiment of the present disclosure;
FIG. 1A is a partially enlarged view of FIG. 1;
FIG. 1B is another partially enlarged view of FIG. 1;
FIG. 2 is a perspective view of the baby carrier according to the first embodiment of the present disclosure from another angle of view;
FIG. 3 is a perspective view of the baby carrier according to the first embodiment of the present disclosure from yet another angle of view;
FIG. 4 is a perspective view of two outer covers of the baby carrier according to the present disclosure;
FIG. 5 is a rear view of the baby carrier according to the present disclosure;
FIG. 6 is a side view of the baby carrier according to the present disclosure;
FIG. 7 is a front view of a second seat belt guider of the baby carrier according to the present disclosure;
FIG. 8 is a side view of the second seat belt guider of the baby carrier according to the present disclosure;
FIG. 9 is a perspective view of the second seat belt guider of the baby carrier according to the present disclosure;
FIG. 10 is a sectional view of the second seat belt guider of the baby carrier according to the present disclosure along line A-A of FIG. 7;
FIG. 11 is a perspective view of a baby carrier according to a second embodiment of the present disclosure, in which a first fastener and a second fastener are omitted;
FIG. 12 is a perspective view of two abutting structures of the baby carrier according to the present disclosure;
FIG. 13 is a perspective view of a reinforcing sheet of the baby carrier according to the present disclosure; and
FIG. 14 is a perspective view of the baby carrier according to the second embodiment of the present disclosure from another angle of view, in which the first fastener and the second fastener are omitted.

### Reference numerals:

1 Baby carrier
10 Handle
20 Seat
   210 Base
      211 Base housing
   220 Backrest section
   230 Leg section
      231 Abutting structure
      2311 First edge
      2312 Second edge
   240 Waist belt guider
      241 Body
         2411 Reinforcing rib
         2412 First fastening hole
         2413 Second fastening hole
      242 Outer cover
         2421 Inner side of outer cover
         2422 Outer side of outer cover
         2423 Fixing post
         2424 Convex rib
         2425 Reinforcing surface
      243 Reinforcing sheet
         2431 Notch
         2432 Hole
      244 First fastener
      245 Second fastener
      246 Pass-through opening
      247 Seat fabric clamping gap
      248 Reinforcing Structure
   250 Shoulder belt guider
      251 Opening
      252 Clamping gap
      253 Arm
      254 Limiting tooth
      255 Base plate
      256 Fixing hole

### DETAILED DESCRIPTION

In order to explain the overall concept of the present disclosure more clearly, the following will provide detailed description by way of example in conjunction with the accompanying drawings of the specification.

It should be noted that many specific details are set forth in the following description in order to facilitate a full understanding of the present disclosure, but the present disclosure may be implemented in other ways different from those described herein. Thus, the protection scope of the present disclosure is not limited by specific embodiments disclosed below.

Additionally, in the description of the present disclosure, terms such as "central," "upper," "lower," "front," "rear," "left," "right," "vertical," "horizontal," "top," "bottom," "inner," "outer," "axial," "radial," "circumferential" and the like refer to orientations or positions as then described or as shown in the drawings under discussion. These terms are merely for convenience and simplicity of description, and do not indicate or imply that the device or element referred to must have a particular orientation or be constructed and operated in a particular orientation. Thus, these terms shall not be construed as limitation on the present disclosure.

In the present disclosure, unless expressly specified or limited otherwise, terms such as "mounted," "connected," "coupled," "fixed" and the like should be understood broadly, and may be, for example, fixed connection, detachable connection, or integral connection; may also be direct connection or indirect connection via intervening structures; may also be inner connection or mutual interaction of two components. However, a clear indication of direct connection means that two subjects at a connection position do not construct a connection relationship therebetween through a transition structure, but are only connected only through a connection structure to form a whole. For a person skilled in the art, the specific meanings of the above terms in the present disclosure may be understood according to specific situations.

In the present disclosure, unless expressly specified or limited otherwise, a structure in which a first feature is "on" or "below" a second feature may include an embodiment in which the first feature is in direct contact with the second feature, or an embodiment in which the first feature and the second feature are indirectly contacted via an intervening feature. Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. The appearances of these phrases throughout this specification are not necessarily referring to the same embodiment or example. Furthermore, the particular features, structures, materials, or characteristics may be combined in any suitable manner in one or more embodiments or examples.

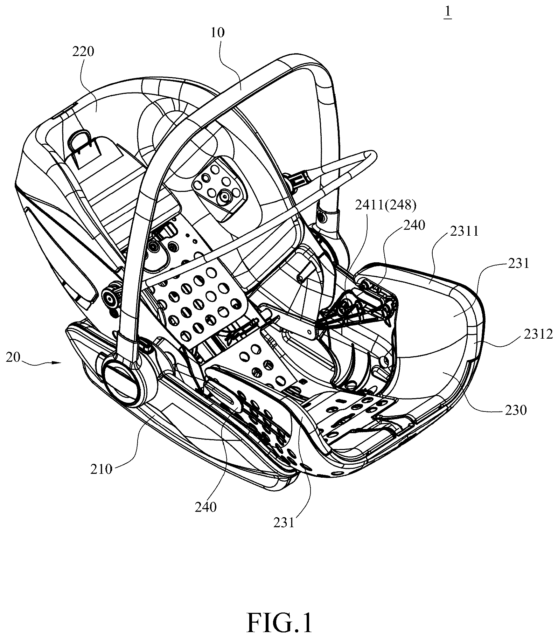

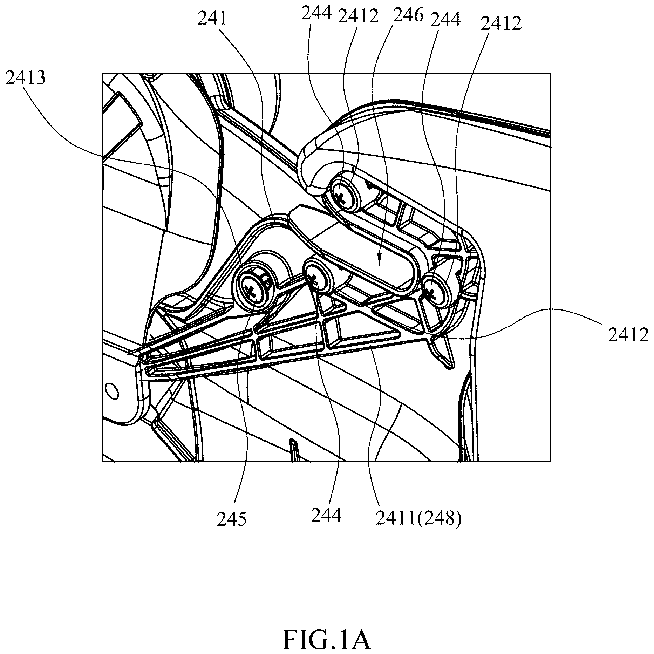

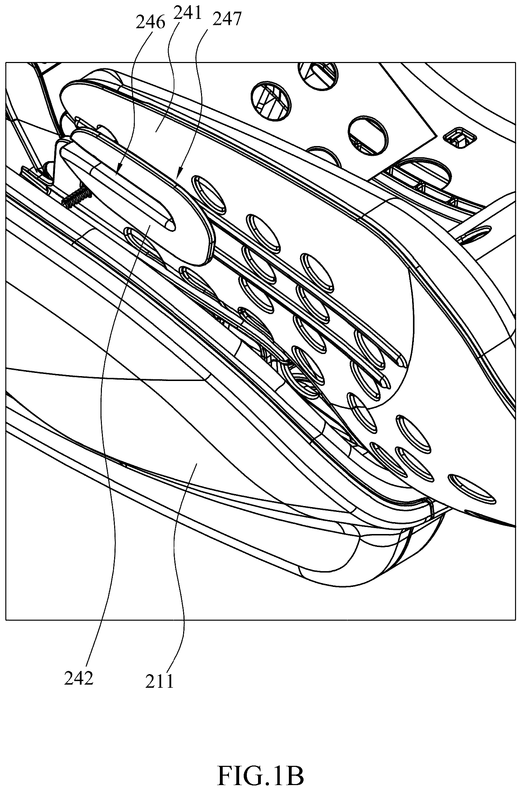

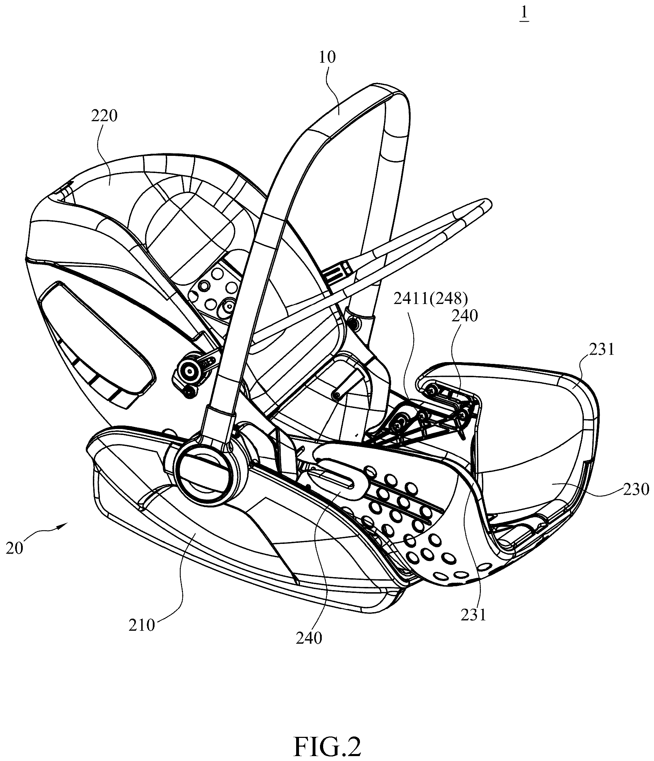

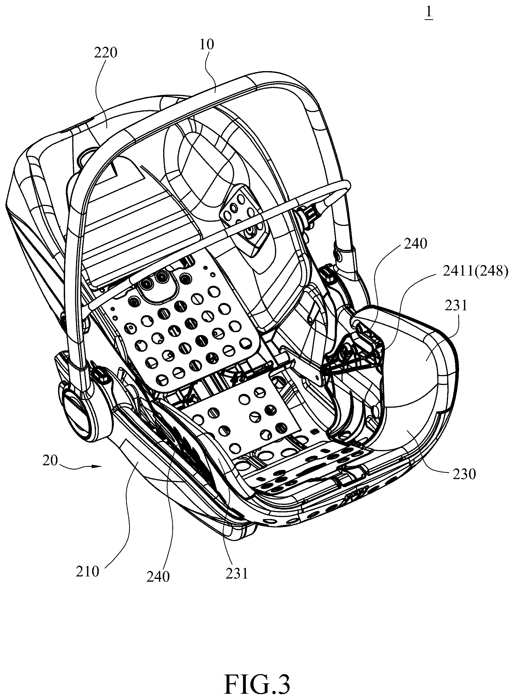

Referring to FIGS. 1, 2, and 3, the present disclosure provides a baby carrier 1, including a seat 20 and a handle 10. The handle 10 may be connected to both sides of the seat 20 and is pivotable about the seat 20.

The seat 20 may include a base 210, a backrest section 220, and a leg section 230. The backrest section 220 may include a plastic casing and a foam body. The backrest section 220 may be pivotably fixed to the base 20 such that an infant or a child may lie flat and sit up in the seat 20. The leg section 230 may include a plastic casing and a foam body. The leg section 230 may be fixed to the base 20 and cannot pivot relative to the base 20.

The seat 20 may also include a waist belt guider 240 (a first guider). One waist belt guider 240 may be provided at each of a left side and a right side of the leg section 230. The waist belt guider 240 may be arranged at an end of the leg section 230 close to the backrest section 220 and allow a seat belt (not shown) to pass through. The seat belt may include a waist belt and a shoulder belt. The waist belt guider 240 allows for passage of the waist belt of the seat belt. The waist belt guider 240 may be integrally formed with the leg section 230. Specifically, the waist belt guider 240 may be integrally formed with the plastic casing of the leg section 230.

Referring to FIG. 1A, the waist belt guider 240 may include a body 241. The body 241 may be integrally formed with the plastic casing of the leg section 230 and have a pass-through opening 246. One pass-through opening 246 may be provided at either side of the seat 20. The pass-through opening 246 may penetrate the baby carrier 1 along a lateral direction of the baby carrier 1, and be formed with an opening at a side facing the backrest section 220, to allow the waist belt of the seat belt to enter the pass-through opening 246.

In a first embodiment, the waist belt guider 240 may include an outer cover 242. The outer cover 242 may be fixed to the body 241 at the pass-through opening 246 by a first fastener 244. The first fastener 244 may be arranged around the pass-through opening 246, but the present disclosure is not limited thereto. The body 241 may be provided with a reinforcing rib 2411 on a side of the body 241 facing the outer cover 242. Optionally, the body 241 may be provided with the reinforcing rib 2411 on a side of the body 241 facing away from the outer cover 242. The body 241 may be provided with a plurality of reinforcing ribs. The plurality of reinforcing ribs are arranged in a staggered manner to cover a load-bearing region of the waist belt guider 240. The plurality of reinforcing ribs may be arranged along a first direction, a second direction perpendicular to the first direction, and a third direction inclined relative to both the first direction and the second direction.

The body 241 may be fixed to a base housing 211 of the base 210 by a second fastener 245, such that the leg section 230 is fixedly coupled to the base housing 211 and hence the leg section 230 cannot rotate relative to the base housing 211. The second fastener 245 may be arranged at a position further away from the pass-through opening 246 than the first fastener 244. The first fastener 244 and the second fastener 245 may be screws, bolts, rivets, pins, and the like, which is not limited in the present disclosure.

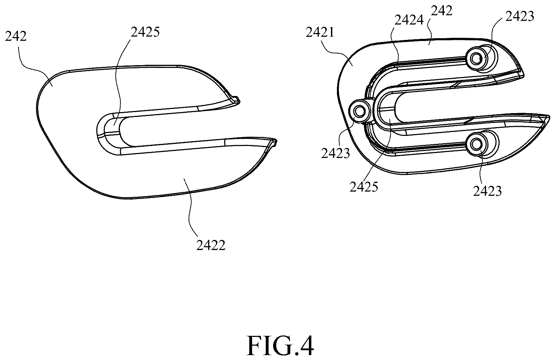

Referring to FIG. 1B, a seat fabric clamping gap 247 for fixing a seat fabric (not shown) may be formed between the outer cover 242 and the body 241. Specifically, the seat fabric clamping gap 247 may be formed between the outer cover 242 and an outer wall surface of the plastic casing of the body 241. The seat fabric clamping gap 247 is formed due to a thickness of a fixing post 2423 or a convex rib 2424 (see FIG. 4). The seat fabric may be a fabric covering the baby carrier 1, which is configured for directly contacting with the infant or the child. The outer cover 242 may be formed in a U-shape to match the shape of the pass-through opening 246.

Referring to FIG. 4, a reinforcing surface 2425 may be formed on an inner side of the outer cover 242 (a side facing the pass-through opening 246). The reinforcing surface 2425 may be at an angle relative to other portions of the outer cover 242 other than the reinforcing surface 2425. Specifically, the reinforcing surface 2425 may be perpendicular to other portions of the outer cover 242 other than the reinforcing surface 2425. The reinforcing surface 2425 may be formed on the entire inner side of the U-shape, such that the reinforcing surface 2425 defines the pass-through opening 246 and may enhance the bearing strength of the pass-through opening 246. A side of the outer cover 242 facing the body 241 may be formed with a fixing post 2423 corresponding to the first fastener 244. The fixing post 2423 may have a certain height, and be internally formed with a through-hole for the first fastener 244 to pass through. The number of the first fasteners 244 may correspond to the number of the fixing posts 2423. In this embodiment, there may be three first fasteners 244 and three fixing posts 2423. In other embodiments, there may be other numbers of first fasteners 244 and fixing posts 2423, for example, two, four, five and so on. The side of the outer cover 242 facing the body 241 may be formed with a convex rib 2424. The convex rib 2424 may pass through the fixing post 2423. In the case of having a plurality of fixing posts 2423, the convex rib 2424 may connect the plurality of fixing posts 2423. In this embodiment, the convex rib 2424 connects three fixing posts 2423 sequentially, thereby forming a U-shape. In this way, the convex rib 2424 can enhance the strength of the outer cover 242 over nearly the entire length of the outer cover 242. The convex rib 2424 has a certain height to form the seat fabric clamping gap 247.

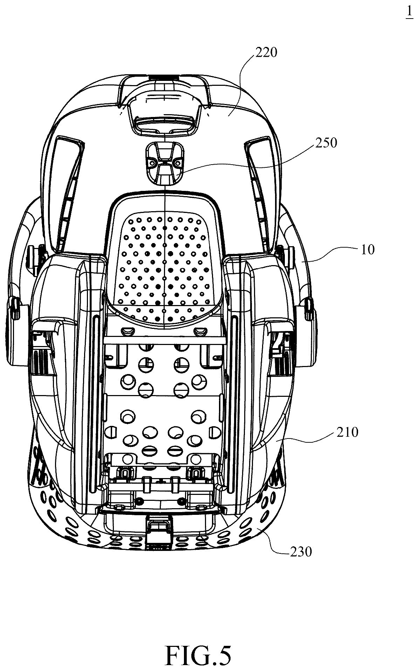

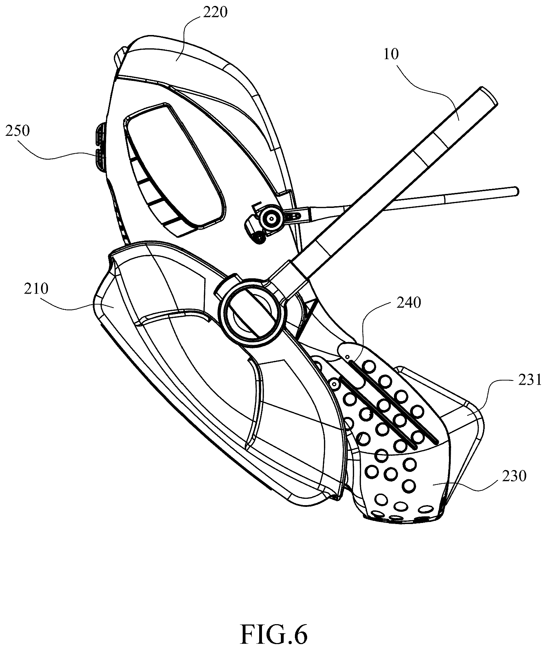

Referring to FIGS. 5 and 6, the seat 20 may also include a shoulder belt guider 250 (a second guider). The shoulder belt guider 250 may be fixed to the backrest section 220 and allow a shoulder belt (not shown) of the seat belt to pass through. Specifically, the shoulder belt guider 250 may be centrally fixed to a back surface (a surface away from the leg section 230) of the backrest section 220. The shoulder belt guider 250 may be connected to the backrest section 220 by fasteners such as rivets, blind rivets, or screws.

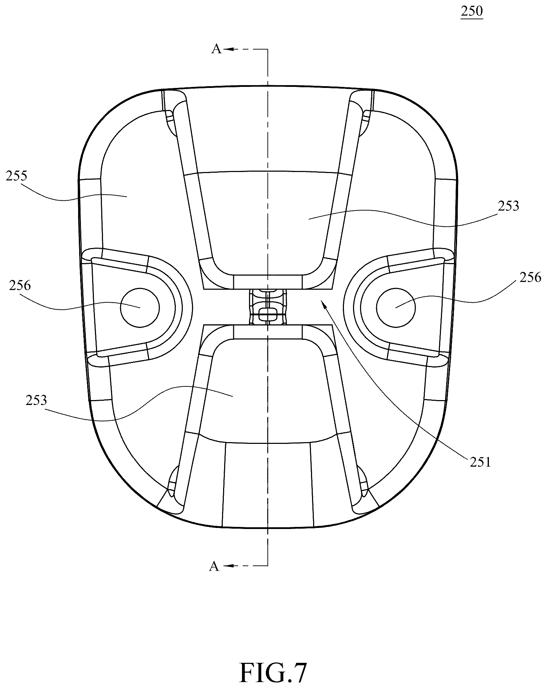

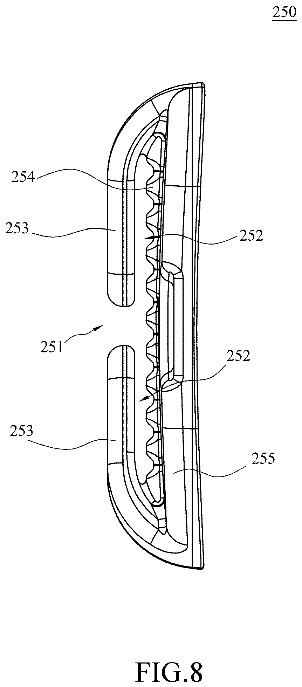

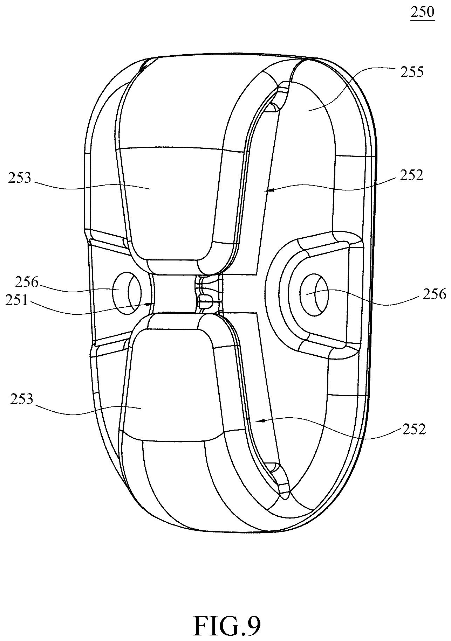

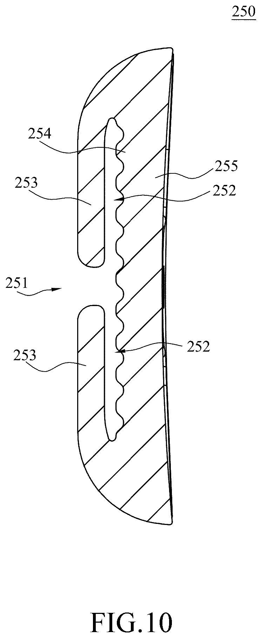

Referring to FIG. 7 to FIG. 10, the shoulder belt guider 250 may have a base plate 255 and two arms 253 extending from opposite ends (upper and lower ends as shown in FIG. 7) of the base plate 255. In the present disclosure, the upper end of the base plate 255 refers to an end away from the base 210, while the lower end of the base plate 255 refers to an end close to the base 210. The two arms 253 first extend at an angle relative to the base plate 255 and then extend toward each other in a direction substantially parallel to the base plate 255. Each of the two arms 253 may have a gradually decreasing width along its extension direction. An opening 251 for passage of the seat belt may be formed between the two arms 253. A clamping gap 252 may be formed between each of the two arms 253 and the base plate 255. The base plate 255 may be formed with limiting teeth 254 within the clamping gap 252. As shown in FIGS. 8 and 10, the limiting teeth 254 may be a row of teeth continuously extending between the base plate 255 and the two arms 253. The limiting teeth 254 may have a width narrower than the arms 253. When the shoulder belt of the seat belt passes through the clamping gap 252, the limiting teeth 254 may assist in clamping the shoulder belt. The two arms 253 may be elastic, such that the two arms 253 may deform elastically as the shoulder belt of the seat belt passes through the clamping gap 252. As shown in FIG. 7, left and right sides of the base plate 255 may each have a fixing hole 256 to allow a fixing member to fix the shoulder belt guider 250 to the backrest section 220. The base plate 255 may have other numbers and positions of fixing holes 256, which will not be limited in the present disclosure. The base plate 255 may have no fixing hole 256, that is, the shoulder belt guider 250 may be fixed to the backrest section 220 by other means.

Referring to FIG. 1, the seat 20 may also include an abutting structure 231. The abutting structure 231 may be a foam body. The abutting structure 231 may form an integral structure with the foam body on the leg section 230. The abutting structure 231 may be arranged at an end of the leg section 230 away from the backrest section 220, that is, the abutting structure 231 may be arranged at a front end of the leg section 230 to face a backrest of a vehicle seat. Left and right sides of the leg section 230 may each be provided with one abutting structure 231.

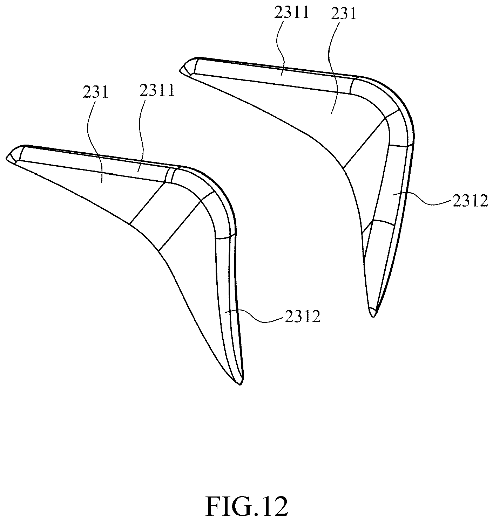

Referring to FIG. 12, the abutting structure 231 may have a first edge 2311 and a second edge 2312 at an angle to each other. The first edge 2311 is an upper edge (an upper surface) of the abutting structure 231, and the second edge 2312 is a front edge (a front surface) of the abutting structure 231. The first edge 2311 may be substantially perpendicular to the second edge 2312. That is, the angle between the first edge 2311 and the second edge 2312 is about 90°, and for example, it may range from 85° to 95°. When the baby carrier 1 is placed on the vehicle seat (not shown), the second edge 2312 rests against the backrest of the vehicle seat, such that the baby carrier 1 can be well prevented from tipping over in a direction toward a vehicle trunk (in front of the baby carrier 1) when subjected to impact.

A second embodiment of the present disclosure will be described below. The second embodiment of the present disclosure differs from the first embodiment mainly in that the waist belt guider 240 is different and the abutting structure 231 is different. The waist belt guider 240 in the second embodiment is reinforced by a reinforcing sheet 243 (the reinforcing sheet 243 and the reinforcing rib 2411 may be collectively referred to as a reinforcing structure 248). The abutting structure 231 in the second embodiment may be formed as a separate abutting block to be fixed to a front end surface of the leg portion 230 by an adhesive or a fastener.

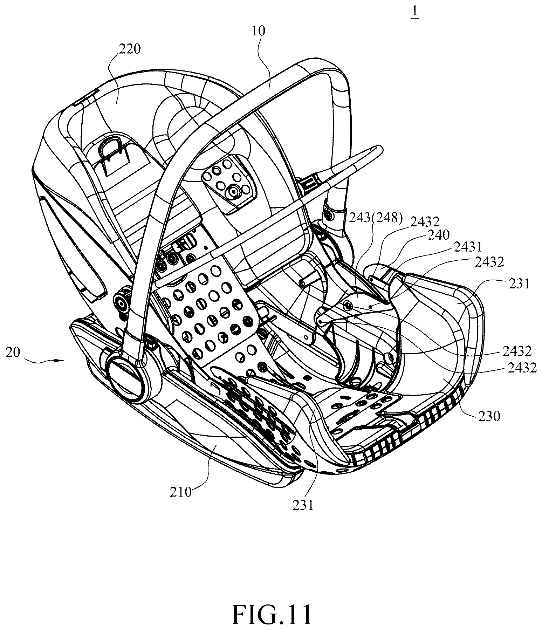

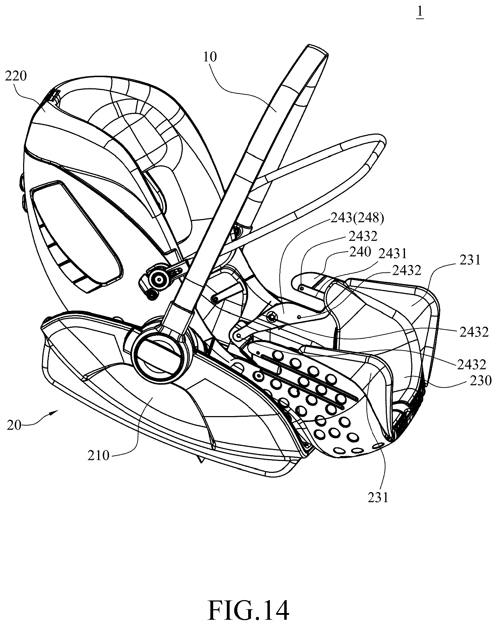

Specifically, referring to FIGS. 11 and 14, the waist belt guider 240 may include the body 241 and the reinforcing sheet 243. The body 241 in the second embodiment may refer to the first embodiment. However, the body 241 in the second embodiment may have no reinforcing rib 2411. The reinforcing sheet 243 may be fixed to an inner side of the body 241 at the pass-through opening 246 by the first fastener 244 (in the present disclosure, the inner side of the body 241 refers to a side facing a seating area of the infant or the child, and an outer side of the body 241 refers to a side facing away from the seating area of the infant or the child). The plastic casing of the body 241 may be fixed to the base housing 211 of the base 210 by the second fastener 245, such that the plastic casing of the leg section 230 cannot rotate relative to the base housing 211. The reinforcing sheet 243 may be fixed to the plastic casing of the body 241 by the second fastener 245. The reinforcing sheet 243 may be an iron sheet. Optionally, the reinforcing sheet 243 may be made of other rigid materials, such as metals (other than iron) and their alloys, plastics, carbon fiber, and the like.

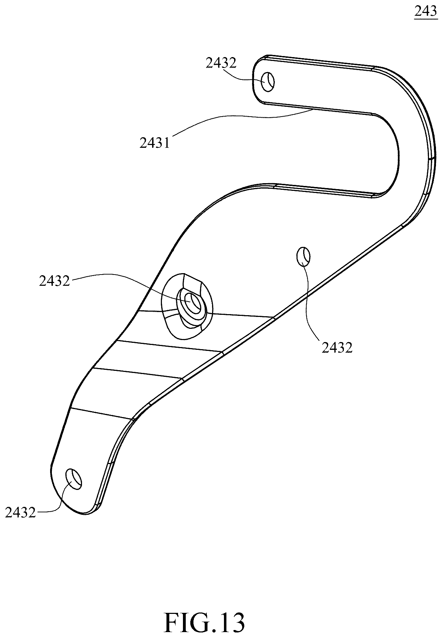

Referring to FIG. 13, the reinforcing sheet 243 may overall exhibit an approximately triangular shape, with one side surface forming a notch 2431 that corresponds to the pass-through opening 246. A plurality of holes 2432 may be formed in the reinforcing sheet 243 such that the reinforcing sheet can be penetrated by the first fastener 244 and the second fastener 245 and hence connected to other components. The shape of the reinforcing sheet 243 may be designed as needed so as to meet requirements of the desired load-bearing region.

Referring to FIG. 11 and FIG. 12, the seat 20 may also include a separate abutting structure 231 (an abutting block). The abutting structure 231 may be independently formed and fixed to the front end surface of the leg section 230. The abutting structure 231 may be formed in a shape that approximates a triangle, and a long side of the triangle may be formed as an arc to match a shape of the front end of the leg section 230. The abutting structure 231 may be a plastic block, a soft rubber block, or a foam block, but the present disclosure is not limited thereto. The abutting structure 231 may be fixed to an end of the leg section 230 away from the backrest section 220. That is, the abutting structure 231 may be arranged at the front end of the leg section 230 to face the backrest of the vehicle seat, such that the baby carrier 1 can be well prevented from tipping over in the direction toward the vehicle trunk (in front of the baby carrier 1) when subjected to impact.

A third embodiment of the present disclosure will be described below. The waist belt guider 240 in the third embodiment may include the body 241, the outer cover 242, and the reinforcing sheet 243. The body 241 may form an integral structure with the plastic casing of the leg section 230 and have the pass-through opening 246. The outer cover 242 in the third embodiment may be identical or similar to the outer cover 242 in the first embodiment. The reinforcing sheet 243 in the third embodiment may be identical or similar to the reinforcing sheet 243 in the second embodiment. The reinforcing sheet 243 may be fixed at the pass-through opening 246 by the first fastener 244 to form the load-bearing region. An inner wall surface of the body 241 in the third embodiment may not have the reinforcing rib 2411.

The waist belt guider 240 may also include a second fastener 2413. The second fastener 2413 may connect and fix the plastic casing of the body 241 to the base housing 211, such that the plastic casing of the leg section 230 is connected and fixed to the base housing 211 and hence is not rotatable. The second fastener 2413 also fixes the reinforcing sheet 243 to the body 241.

The waist belt guider 240 according to the present disclosure can well realize the binding of the seat belt, ensuring sufficient strength of the waist belt guider 240, and improving firmness of binding the baby carrier 1 by the seat belt, and meanwhile will not interfere with adjustment to a lie-flat angle of the seat 20 of the baby carrier 1. The front end surface of the leg section 230 is provided with the abutting structure 231 to enhance the stability of the baby carrier 1 upon impact.

Other embodiments of the present disclosure will be readily conceivable to the person skilled in the art upon consideration of the specification and practice of the invention disclosed herein. The present application is intended to cover any variations, uses, or adaptations that follow the general principles of the present disclosure and include common knowledge or conventional technical means in the art, which are not disclosed herein. The specification and embodiments are merely exemplary, and the true scope and spirit of the present disclosure is indicated by the claims of the present disclosure.

Although the present disclosure has been described with reference to typical embodiments, the terms used herein are illustrative and exemplary rather than limiting. Since the present disclosure can be implemented in various forms without departing from the spirit and essence of the present disclosure, it should be understood that the above embodiments are not limited to any of the aforementioned details, but should be interpreted as broadly as possible within the scope defined by the claims. Therefore, all variations falling within the scope of the claims or their equivalents should be covered by the claims.

## Claims

1. A baby carrier (1), comprising:
a base (2);
a leg section (230) fixedly connected to the base (2);
a backrest section (220) pivotably connected to the base (2); and
a guider (240/250) configured for passage of a seat belt,
wherein the guider (240/250) comprises a first guider (240) arranged in the leg section (230) and a second guider (250) arranged in the backrest section (220).

2. The baby carrier (1) according to claim 1, wherein the first guider (240) is a waist belt guider, and the second guider (250) is a shoulder belt guider, and/or
wherein the first guider (240) is arranged at an end of the leg section (230) close to the backrest section (220), and one first guider (240) is provided at each of a left side and a right side of the leg section (230), and/or
wherein the first guider (240) comprises a body (241) integrally formed with the leg section (230) and having a pass-through opening (246), and a side of the first guider (240) is provided with a reinforcing structure (248), and/or
the baby carrier (1) further comprising an abutting structure (231) arranged at an end of the leg section (230) away from the backrest section (220), and/or
wherein each of the leg section (230) and the backrest section (220) comprises a plastic casing and a foam body.

3. The baby carrier (1) according to any one of the preceding claims, wherein the first guider (240) comprises a body (241) integrally formed with the leg section (230) and having a pass-through opening (246), and a side of the first guider (240) is provided with a reinforcing structure (248), and
wherein the first guider (240) comprises an outer cover (242) fixed to the body (241) at the pass-through opening (246) by a first fastener (244), and a side of the body (241) facing away from the outer cover (242) is provided with a reinforcing rib (2411).

4. The baby carrier (1) according to claim 3, wherein the body (241) is provided with a plurality of reinforcing ribs (2411) arranged in a staggered manner, and/or
wherein a seat fabric clamping gap (247) for fixing a seat fabric is formed between the outer cover (242) and the body (241), and/or
wherein the outer cover (242) is formed in a U-shape, and/or
wherein a side of the outer cover (242) facing the body (241) is formed with a convex rib (2424) and formed with a fixing post (2423) corresponding to the first fastener (244).

5. The baby carrier (1) according to claim 3 or 4, wherein the body (241) is fixed to a base housing (211) of the base (2) by a second fastener (245), such that the leg section (230) is non-rotatable relative to the base housing (211),
optionally the first fastener (244) is arranged around the pass-through opening (246),
optionally the second fastener (245) is arranged at a position further away from the pass-through opening (246) than the first fastener (244).

6. The baby carrier (1) according to any one of the preceding claims 3 to 5, wherein the outer cover (242) is formed in a U-shape, and
wherein a reinforcing surface (2425) is formed on an inner side (2421) of the outer cover (242) and is perpendicular to other portions of the outer cover (242).

7. The baby carrier (1) according to any one of the preceding claims 3 to 6, wherein a side of the outer cover (242) facing the body (241) is formed with a convex rib (2424) and formed with a fixing post (2423) corresponding to the first fastener (244), and
wherein the convex rib (2424) passes through the fixing post (2423).

8. The baby carrier (1) according to any one of the preceding claims 3 to 7, wherein a side of the outer cover (242) facing the body (241) is formed with a convex rib (2424) and formed with a fixing post (2423) corresponding to the first fastener (244), and
wherein the outer cover (242) has a plurality of fixing posts (2423), and the convex rib (2424) connects the plurality of fixing posts (2423),
optionally the convex rib (2424) is formed in a U-shape.

9. The baby carrier (1) according to any one of the preceding claims, wherein the first guider (240) comprises a body (241) integrally formed with the leg section (230) and having a pass-through opening (246), and a side of the first guider (240) is provided with a reinforcing structure (248), and
wherein the first guider (240) further comprises a reinforcing sheet (243) fixed to the body (241) at a pass-through opening by a first fastener (244),
optionally the body (241) is fixed to a base housing (211) of the base (2) by a second fastener (245), such that the leg section (230) is non-rotatable relative to the base housing (211), and the reinforcing sheet (243) is fixed to the body (241) by the second fastener (245).

10. The baby carrier (1) according to any one of the preceding claims 3 to 9, wherein the first guider (240) further comprises a reinforcing sheet (243) fixed to the body (241) at the pass-through opening by the first fastener (244),
optionally the body (241) is fixed to a base housing (211) of the base (2) by a second fastener (245), such that the leg section (230) is non-rotatable relative to the base housing (211), and the reinforcing sheet (243) is fixed to the body (241) by the second fastener (245).

11. The baby carrier (1) according to any one of the preceding claims, wherein the second guider (250) comprises a base plate (255) and two arms (253) extending from opposite ends of the base plate (255),
optionally an opening (251) for passage of the seat belt is formed between the two arms (253),
optionally a clamping gap (252) is formed between each of the two arms (253) and the base plate (255), and the base plate (255) is formed with limiting teeth (254) within the clamping gap (252).

12. The baby carrier (1) according to any one of the preceding claims, further comprising an abutting structure (231) arranged at an end of the leg section (230) away from the backrest section (220),
optionally the abutting structure (231) has a first edge (2311) and a second edge (2312) at an angle to each other, and the first edge (2311) is substantially perpendicular to the second edge (2312),
optionally the abutting structure (231) is integrally formed with the leg section (230),
optionally the abutting structure (231) is independently formed and fixed to the leg section (230).

13. A baby carrier (1), comprising:
a base (2);
a leg section (230) fixedly connected to the base (2);
a backrest section (220) pivotably connected to the base (2); and
a first guider (240) arranged in the leg section (230) and configured for passage of a waist belt of a seat belt.

14. The baby carrier (1) according to claim 13, wherein the first guider (240) is arranged at an end of the leg section (230) close to the backrest section (220), and one first guider (240) is provided at each of a left side and a right side of the leg section (230),
optionally the first guider (240) comprises a body (241) and an outer cover (242), the body (241) being integrally formed with the leg section (230) and having a pass-through opening, and a side of the first guider (240) is provided with a reinforcing structure (248); the outer cover (242) is fixed to the body (241) at the pass-through opening (246) by a first fastener (244), and a side of the body (241) facing away from the outer cover (242) is provided with a reinforcing rib (2411),
optionally the first guider (240) further comprises a reinforcing sheet (243) fixed to the body (241) at the pass-through opening by the first fastener (244).

15. A baby carrier (1), comprising:
a base (2);
a leg section (230) fixedly connected to the base (2);
a backrest section (220) pivotably connected to the base (2); and
a second guider (250) arranged in the backrest section (220) and configured for passage of a shoulder belt of a seat belt,
optionally the second guider (250) comprises a base plate (255) and two arms (253) extending from opposite ends of the base plate (255), and/or
wherein the two arms (253) first extend at an angle relative to the base plate (255) and then extend toward each other in a direction substantially parallel to the base plate (255), and/or
wherein each of the two arms (253) has a gradually decreasing width along its extension direction, and an opening (251) for passage of the seat belt is formed between the two arms (253), and/or
wherein a clamping gap (252) is formed between each of the two arms (253) and the base plate (255), and the base plate (255) is formed with limiting teeth (254) within the clamping gap (252).
